# EUROPEAN PATENT SPECIFICATION

(11) **EP 1 610 993 B1**
(45) Date of publication and mention of the grant of the patent: **20.09.2006**
(21) Application number: 03723055.4
(22) Date of filing: 10.04.2003
(51) Int. Cl.: B60T 13/74, B60T 7/10

(54) **VEHICLE PARKING BRAKE ACTUATOR**
FESTSTELLBREMSBETÄTIGUNG FÜR KRAFTFAHRZEUG
DISPOSITIF DE COMMANDE DE FREIN DE PARKING DE VEHICULE

(43) Date of publication of application: 04.01.2006
(73) Proprietor: Freni Brembo S.p.A., 24035 Curno (Bergamo) (IT)
(72) Inventor: TEMPESTINI, Serge, I-24035 Curno (Bergamo) (IT); CARRARA, Marco, I-20062 Cassano D'Adda (Milano) (IT)
(74) Representative: Siniscalco, Fabio
(86) International application number: PCT/IT2003/000222
(87) International publication number: WO 2004/089715

(56) References cited:
- WO-A-02/20324
- DE-A- 19 829 514
- FR-A- 2 810 953
- US-A- 5 590 744
- US-B1- 6 244 394

## Description

. The subject of the invention is a vehicle parking brake actuator.

**.** There are known parking brakes which are operated manually by means of a lever housed, in the case of motor cars for example, inside the passenger compartment of the vehicle.

**.** Manually operated brakes have some disadvantages such as the presence of a complex and cumbersome system of cables which also requires balancing and adjustment in the course of the normal life of the vehicle.

**.** From the above it can be seen how there is a need for a parking brake actuator which is particularly effective and capable of balancing different pulling forces on the two connecting cables to the braking . devices WO02/20324 discloses a parking brake actuator and is considered to be the closest prior art.

**.** There are known parking brake actuators comprising an electric motor and capable of balancing different amounts of travel of the connecting cables and therefore different pulling forces between the two braking devices, for example callipers, which act on two wheels of the vehicle, preferably the rear ones, in particular in the case where these forces differ from each other as a result of wear or malfunction. An example of this type of parking brake actuator is described and illustrated in US 5,590,744 and in US 6,244,394.

. US 5,590,744 describes and illustrates a parking brake actuator operated by an electric motor by means of gearing and a screw and nut mechanism. In the case where the electric motor causes a nut to rotate, the latter is free to undergo translational motion and two screws are provided associated with the respective connecting cables to the braking devices. In the case where the electric motor causes a screw to rotate, the latter is free to undergo translational motion and two nuts are provided associated with the respective connecting cables to the braking elements. Although it allows the forces to be balanced between the two cables, especially in the case of differing forces, at the same time avoiding unloading these forces onto the actuator housing, the actuator described in US 5,590,744 is particularly cumbersome especially in a longitudinal direction and is therefore difficult to position on the vehicle.

**.** US 6,244,394 describes and illustrates a parking brake actuator operated by an electric motor. A bush is caused to rotate by the electric motor by means of a series of gears, and inside, with a positive engagement connection, houses the nut of a screw and nut mechanism. The nut can slide axially relative to the bush and is made to rotate by it. The screw and nut are connected to the respective connecting cables to the braking devices. In an attempt to limit the number of components, the parking brake actuator described in US 6,244,394 is particularly complex especially as regards the connection between one of the connecting cables and the nut which is subject to rotational and translational motion at the same time.

**.** The solutions illustrated above are not greatly effective, are particularly complex both from a structural and a functional point of view as well as being fairly cumbersome, and therefore have substantial disadvantages which mean that they are not in widespread use on the market.

**.** The problem addressed by the invention is to propose a parking brake actuator which meets the above requirement and, at the same time, obviates the unwelcome disadvantages alluded to above with reference to the known technology.

. This problem is solved by means of a parking brake actuator according to claim 1.

**.** Other characteristics and advantages of the parking brake actuator according to the invention will become clear from the following description of preferred examples of embodiment which are provided purely by way of non-limiting example, with reference to the appended drawings, in which:

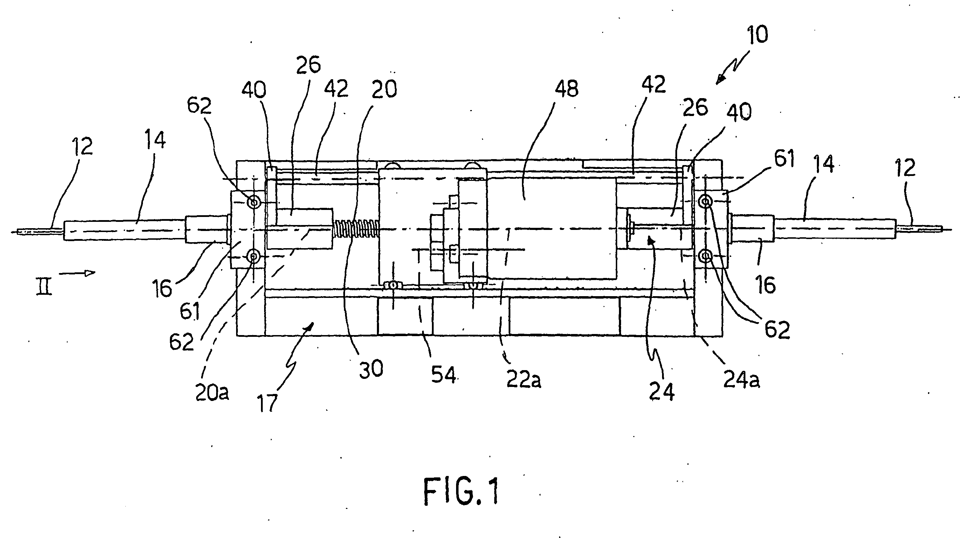

**.** figure 1 shows a plan view of a parking brake actuator according to the invention;

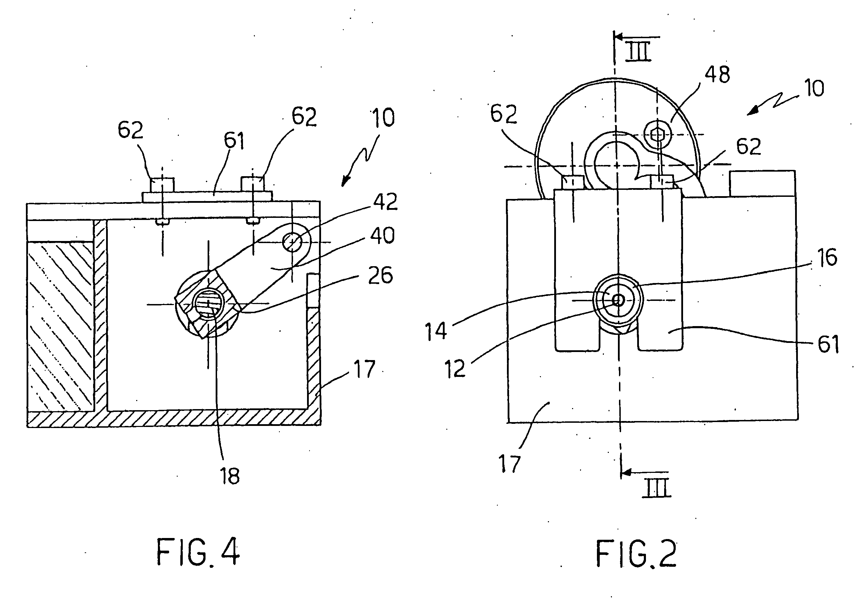

**.** figure 2 shows a view along the arrow II of the parking brake actuator in figure 1;

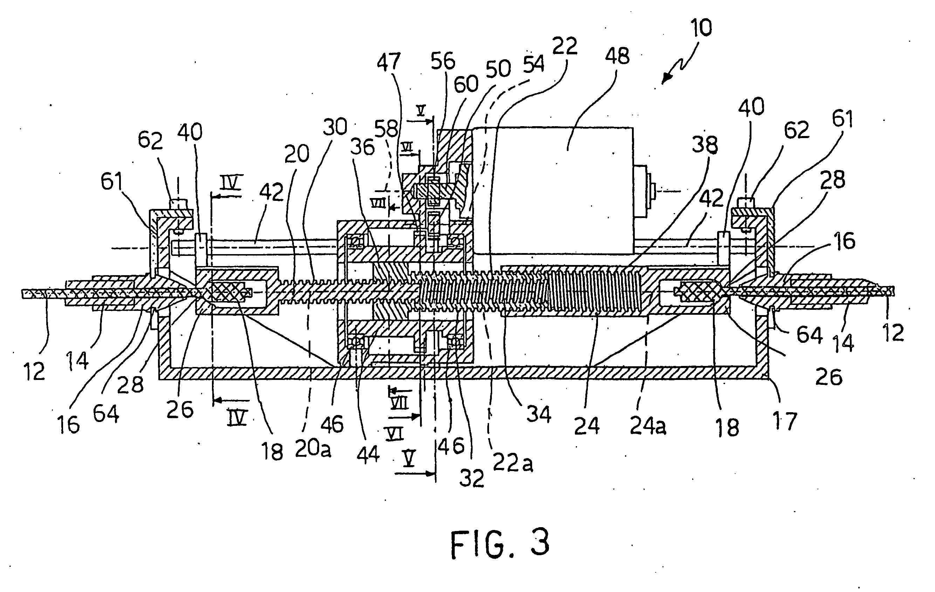

. figure 3 shows a sectional view along the line III-III in figure 2 of the parking brake actuator according to the invention;

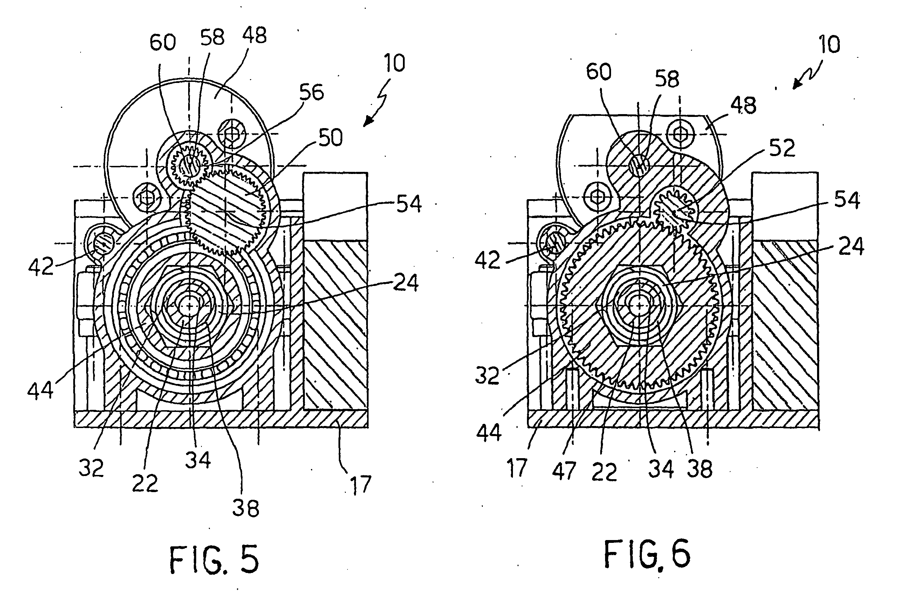

**.** figure 4 shows a sectional view along the line IV-IV in figure 3 of the parking brake actuator according to the invention;

**.** figure 5 shows a sectional view along the line V-V in figure 3 of the parking brake actuator according to the invention;

**.** figure 6 shows a sectional view along the line VI-VI in figure 3 of the parking brake actuator according to the invention;

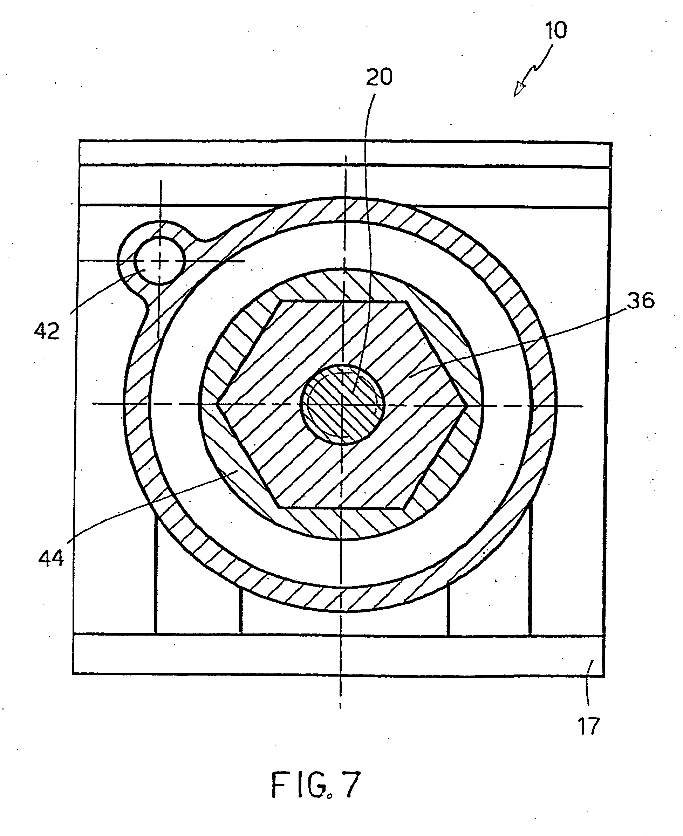

. figure 7 shows a sectional view along the line VII-VII in figure 3 of the parking brake actuator according to the invention.

. With reference to the above drawings, the number 10 indicates as a whole a parking brake actuator in particular for vehicles.

**.** The number 12 indicates two connecting cables to respective braking devices of the vehicle housed respectively in a sheath 14. One end 16 of the two sheaths 14 is locked to a support structure 17 of the actuator.

**.** The two cables 12 with the respective sheaths are connected to the parking brake actuator on opposite sides of the actuator.

**.** The end of the cable 12 which is connected to the actuator comprises a head 18 preferably substantially cylindrical and having larger transverse dimensions compared with the transverse dimensions of the respective cable.

**.** The numbers 20, 22 and 24 indicate respectively a first threaded element, a second threaded element and a third and last threaded element. The second threaded element 22 represents an intermediate threaded element between the first threaded element and the last threaded element.

. The first threaded element is connected to one of the cables 12 and in particular engages with the respective head 18. In more detail, one end of the first threaded element 20 comprises a hollow portion 26 capable of housing the head 18 of the respective cable 12. The cable 12 comes out of a head opening 28 made at the end of the hollow portion 26.

**.** Similarly, one end of the last threaded element, or third threaded element, 24 also comprises- a hollow portion, again indicated for the sake of simplicity by the number 26, capable .of housing the head 18 of the respective cable 12. The cable 12 comes out of a head opening, again indicated for the sake of simplicity by the number 28, made at the end of the hollow portion 26.

. The first threaded element 20 is produced in the form of a rod with an external thread 30 and extends along a longitudinal axis 20a. According to a possible form of embodiment, the transverse dimensions of the hollow portion 26 are greater than the transverse dimensions of the first threaded element 20.

. The second threaded element 22, or intermediate threaded element, is produced in the form of a hollow rod which extends along a longitudinal axis 22a coinciding with the longitudinal axis of the first threaded element. Moreover, the second threaded element 22 has an outer thread 32 to be connected externally to the third threaded element 24 and an internal thread 34, of opposite pitch to the external thread 32, to receive the first threaded element 20 on the inside.

**.** According to a possible form of embodiment, the second threaded element 22 comprises a drive portion 36, preferably having a cross-section of hexagonal shape. According to a possible form of embodiment, the drive portion 36 is advantageously made at one end of the second threaded element 22, preferably the end on the side of the first threaded element 20, that is the end on the side of the threaded element having smaller transverse dimensions.

**.** According to a possible form of embodiment, the drive portion 36 extends in a transverse direction for a length greater than the transverse size of the third threaded element 24 which is connected externally to the second threaded element 22.

. The third threaded element 24 is produced in the form of a hollow rod which extends along a longitudinal axis 24a coinciding with the longitudinal axis 22a of the second threaded element 22. The third threaded element 24 has an internal thread 38 capable of being connected to the second threaded element 24.

. In other words, the three threaded elements 20, 22, 24 are connected to each other in pairs as a screw and nut connection. The first and the second threaded element produce a kind of first screw and nut mechanism, the second and the third threaded element produce a kind of second screw and nut mechanism.

. The three threaded elements are free to slide in a longitudinal direction, both relative to the support structure 17 of the parking brake, and relative to each other by each being screwed in or out.

**.** According to a possible form of embodiment, the first and the third threaded element comprise means capable of preventing rotation of these about the respective longitudinal axes. According to the form of embodiment in figure 3, these means capable of preventing rotation of the first and the last threaded element about the respective longitudinal axes comprise arms 40. which extend transversely, preferably from the hollow portion 26, and are fitted slidably on rods 42 attached to the support structure 17 and parallel to the longitudinal axes of the threaded elements.

**.** According to a possible form of embodiment, the second threaded element 22 or intermediate threaded element is connected for operating purposes to means capable of driving it angularly. In the form of embodiment shown in figure 3, these means capable of driving the second threaded element 22 angularly comprise a bush 44 which internally houses the second threaded element.

**.** The bush 44 is preferably fitted inside the support structure 17 on bearings 46 fitted to the structure so as to be able to rotate about its longitudinal axis which coincides with the longitudinal axes of the threaded elements.

**.** The internal cross-section of the bush exhibits a cavity having a shape complementary to the shape of the cross-section of the drive portion 36 of the second threaded element 22. According to the example shown in the drawing, the internal cavity in the bush 44 has a hexagonal cross-section capable of receiving and driving in rotation the drive portion 36 of the second threaded element 22.

**.** In other words, the shape of the cross-section of the internal cavity in the bush 44 and of the cross-section of the drive portion 36 are such as to produce a positive engagement connection between the second threaded element 22 and the bush 44 by reason of their geometry. In the example shown, the above connection is produced by means of a connection based on the hexagonal geometry.

**.** According to a possible form of embodiment, the bush 44 has external teeth 47 to be driven in rotation about its longitudinal axis.

**.** According to a possible form of embodiment, the means capable of driving angularly the second threaded element 22 comprise an electric motor 48 fitted to the support structure 17 and connected for operating purposes to the bush 44. In more detail, the means capable of driving angularly the second threaded element 22 comprise reduction gear means placed between the electric motor 48 and the bush 44. According to a possible form of embodiment, the reduction gear means comprise a first gearwheel 50 and a second gearwheel 52 caused to rotate integrally about a longitudinal axis 54.

**.** The first gearwheel 50 meshes with a pinion 56 driven in rotation by the electric motor 48 and the second gearwheel 52 meshes with the external teeth 47 of the bush 44.

. According to a possible form of embodiment, the longitudinal axis 54 of the first and second gearwheels lies outside a plane containing the longitudinal axes of the threaded elements and an axis 58 of a shaft 60 of the electric motor 48.

**.** According to a possible form of embodiment, the electric motor 48 is connected for operating purposes by monitored operating means, preferably of the feedback type.

**.** According to a possible form of embodiment, means are provided to unlock the connecting cables in case of breakage of the parking brake actuator. In the form of embodiment shown in the drawing, the means for unlocking comprise at least one fork 61 for each cable 12 capable of locking longitudinally the sheath 14 and in particular the end 16 of the sheath.

**.** In the example shown in the drawing, the fork 61 has an angular form capable of being removably joined to the support structure 17 by means of screws 62.

**.** The fork 60 is produced so as to accommodate between the two prongs of the fork the end 16 of the sheath 14, where appropriate having a groove 64.

**.** The method of operation of the parking brake actuator described above is described in what follows.

**.** Operating the electric motor 48 causes the pinion 56 and then the first and second gearwheels 50, 52 and the bush 44 to rotate.

**.** By means of the positive engagement connection, the bush 44 drives in rotation the drive portion 36 and therefore the second threaded element 22. Rotation of the first and of the third threaded element is prevented by the arms 40 and by the rods 42. Consequently, depending on the direction of rotation imparted, rotation of the second threaded element 22 causes the first and the third threaded elements to be screwed in or out on the second threaded element. Since the internal thread and the external thread of the second threaded element are of opposite pitch, rotating the second threaded element in one direction causes the first and the third threaded element to move closer together, while rotating the second threaded element in the opposite direction causes the first and the third threaded element to move further apart. When the first and third threaded elements move closer together, the ends of the two cables 12 move closer together correspondingly and therefore braking of the vehicle occurs. When the first and third threaded elements move further apart, the ends of the two cables 12 move further apart correspondingly and therefore the braking devices on the vehicle are released.

**.** In the case where the pulling forces on the two cables are not balanced, for example in case of differences in wear, cables with different resistance or some other reason, the three threaded elements are free to undergo translational motion relative to the bush 44 to balance these forces.

**.** In the case where the parking brake actuator locks in the braking position, it is possible to unlock it by unscrewing the screws 62 and removing the fork 61 to release the respective cable 12.

**.** From the above it will be appreciated how the provision of a parking brake actuator according to the invention meets the requirement mentioned of obtaining effective braking while maintaining limited dimensions, mainly in a longitudinal direction and secondarily also in a direction transverse to the actuator.

**.** Transverse compactness is ensured in that at least one of the threaded elements provided has an internal thread and an external thread, allowing the first and second threaded elements to overlap during operation.

**.** This advantageous effect is achieved without introducing structural or operating complications compared with known actuators or even simplifying the components of the actuator.

**.** The provision of a positive engagement connection between the bush and the threaded element driven angularly gives a very simple and compact structure which is capable of compensating for imbalance between the pulling forces on the two cables.

**.** Because of the reduction gearing placed between the electric motor and the bush, it is possible to adjust the stresses at the design stage by choosing the speed or accuracy characteristics which the actuator must achieve. Moreover, by staggering the longitudinal axis of the first and second gearwheels, a structure is obtained which is also very compact in a transverse direction of the actuator.

. The anti-rotation means for the threaded elements not driven angularly are particularly effective and simple to produce.

**.** A particularly advantageous form of embodiment among those provided is the one with three threaded elements of which the angularly driven element is the central or intermediate one, consequently avoiding complex connecting means between the end threaded elements and the respective cables.

**.** Naturally, provision may be made for variants and/or additions to what is described and illustrated above.

**.** The threaded elements could also be more than three in number, connected to each other in pairs as a screw and a nut. In that case, there would be a first and a last (nth) threaded element respectively connected to the connecting cables and at least two threaded elements intermediate between the first and the last threaded element. These threaded elements would have an external thread to connect them externally to a threaded element and an internal thread, opposite in pitch to the external thread, to receive a further threaded element internally. The threaded elements would .be free to slide in a longitudinal direction and at least one of them would be connected for operating purposes to means capable of driving it angularly.

**.** In the example shown, the element driven angularly is the intermediate element, but different arrangements are possible.

**.** The reduction gear means placed between the electric motor and the bush may have a different form and configuration depending on the transmission requirements.

. The longitudinal axis of the first and second gearwheel may be differently staggered relative to the plane containing the longitudinal axes of the threaded elements and the axis of a shaft of the electric motor. Where appropriate, it can also lie in the same plane.

**.** The bush may be different in form and configuration or be fitted inside the support structure of the parking brake in a manner different from the one described and illustrated.

**.** The connection between the drive portion and the bush may be a connection different from the one described and illustrated, for example being produced by means of a splined section.

. The drive portion may be made in different longitudinal positions on the respective threaded element.

**.** The means capable of preventing rotation of the threaded elements about the respective longitudinal axes may be different in form and configuration from what is described and illustrated, for example ribs may be provided associated with the threaded elements which are able to slide in splines in the support structure or vice versa.

**.** The means for unlocking the connecting cables in case of breakage of the actuator may be different in form and configuration, for example levers or rotating elements may be provided instead of the forks.

. For the purpose of meeting incidental and specific requirements, a person skilled in the art may make numerous modifications, adaptations and substitutions of elements with other functionally equivalent ones to the preferred form of embodiment of the parking brake actuator described above without thereby departing from the scope of the following claims.

## Claims

1. A vehicle parking brake actuator (10) comprising:
two connecting cables (12) to respective braking devices of a vehicle,
at least three threaded elements (20, 22, 24) which extend along respective longitudinal axes (20a, 22a, 24a) and are connected to each other in pairs as a screw and a nut, in which a first and a last of said threaded elements (20, 24) are respectively connected to said connecting cables (12),
at least one threaded element (22) intermediate between said first and last threaded element (20, 24) having an external thread (32) to be connected externally to a threaded element (24) and an internal thread (34), opposite in pitch to said external thread (32), to receive internally a further threaded element (20),
said threaded elements (20, 22, 24) being free to slide in a longitudinal direction and at least one of them (22) being connected for operating purposes to means capable of driving it angularly (44, 48, 50, 52, 56).

2. A parking brake actuator (10) according to claim 1, in which said means capable of driving angularly said at least one threaded element (22) comprise a bush (44) which houses internally said at least one threaded element (22).

3. A parking brake actuator (10) according to claim 2, in which said bush (44) has external teeth (47) to be driven in rotation about a longitudinal axis.

4. A parking brake actuator (10) according to claim 3, in which said means capable of driving angularly said at least one threaded element comprise an electric motor (48) connected for operating purposes to said bush (44).

5. A parking brake actuator (10) according to claim 4, in which said means capable of driving angularly said at least one threaded element comprise reduction gear means (50, 52) placed between said electric motor (48) and said bush .(44) .

6. A parking brake actuator (10) according to claim 5, in which said reduction gear means comprise a first and a second gearwheel (50, 52) caused to rotate integrally about a longitudinal axis (54), said first gearwheel (50) meshing with a pinion (56) driven by the electric motor (48) and said second gearwheel (52) meshing with said bush (44).

7. A parking brake actuator (10) according to claim 6, in which said longitudinal axis (54) of said first and second gearwheel (50, 52) lies outside a plane containing the longitudinal axes (20a, 22a, 24a) of said threaded elements (20, 22, 24) and an axis (58) of a shaft (60) of said electric motor (48).

8. A parking brake actuator (10) according to one of claims 4 to 7, in which said electric motor (48) is connected for operating purposes to monitored operating means.

9. A parking brake actuator (10) according to claim 8, in which said monitored operating means are of the feedback type.

10. A parking brake actuator (10) according to one of claims 2 to 9, in which said bush (44) is fitted inside a support structure (17) on bearings (46) fitted to the structure.

11. A parking brake actuator (10) according to one of claims 2 to 10, in which said at least one threaded element (22) driven angularly comprises a drive portion (36) capable of being driven angularly by said bush (44).

12. A parking brake actuator (10) according to claim 11, in which the connection between said drive portion (36) and said bush (44) is a positive engagement connection by reason of their geometry.

13. A parking brake actuator (10) according to claim 12, in which said connection is produced by means of positive engagement connection with a hexagonal geometry.

14. A parking brake actuator (10) according to claim 12, in which said connection is produced by means of a splined section.

15. A parking brake actuator (10) according to one of claims 11 to 14, in-which said drive portion (36) is made at one end of said at least one threaded element (22) driven angularly.

16. A parking brake actuator (10) according to one of claims 11 to 15, in which said drive portion (36) extends in a transverse direction for a length greater than the transverse size of the at least one threaded element (24) which is connected externally to the threaded element (22) driven angularly.

17. A parking brake actuator (10) according to one of the preceding claims, in which said at least one threaded element (22) driven angularly is said at least one intermediate element between said first and last threaded element (20, 24).

18. A parking brake actuator (10) according to claim 17, in which said first and last threaded element (20, 24) comprise means (40, 42) capable of preventing rotation about the respective longitudinal axes (20a, 24a).

19. A parking brake actuator (10) according to claim 18, in which said means capable of preventing rotation of the first and last threaded element (20, 24) about the respective longitudinal axes (20a, 24a) comprise arms (40) which extend transversely and are fitted slidably on rods (42) parallel to said longitudinal axes (20a, 24a).

20. A parking brake actuator according to one of the preceding claims, in which three threaded elements (20, 22, 24) are provided, the first and the third threaded element (20, 24) being respectively connected to said connecting cables (12) and the second threaded element (22) being said intermediate threaded element.

21. A parking brake actuator (10) according to one of the preceding claims, in which means are provided for unlocking (61, 62) said connecting cables (12) in case of breakage of the actuator.

22. A parking brake actuator (10) according to claim 21, in which said means for unlocking comprise at least one fork (61) capable of locking longitudinally a sheath (14) of said connecting cables (12), said fork (61) being movably associated with a support structure (17) of said actuator (10).

23. A vehicle parking brake comprising braking devices connected for operating purposes to an actuator (10) according to one of claims 1 to 22.

## Patentansprüche

1. Feststellbremsbetätigungseinrichtung (10) für ein Fahrzeug, umfassend:
zwei Verbindungskabel (12) für jeweilige Bremsvorrichtungen eines Fahrzeugs,
wenigstens drei Gewindeelemente (20, 22, 24), welche sich entlang jeweiliger Längsachsen (20a, 22a, 24a) erstrecken und miteinander in Paaren als Schraube und Mutter verbunden sind, wobei ein erstes und ein letztes der Gewindeelemente (20, 24) jeweils mit den Verbindungskabeln (12) verbunden sind,
wenigstens ein Gewindeelement (22) in Zwischenposition zwischen dem ersten und dem letzten Gewindeelement (20, 24), welches ein Außengewinde (32) aufweist, das außen mit einem Gewindeelement (24) zu verbinden ist, sowie ein Innengewinde (34) mit einer zum Außengewinde (32) entgegengesetzten Steigung aufweist, um innen ein weiteres Gewindeelement (20) aufzunehmen,
wobei die Gewindeelemente (20, 22, 24) in einer Längsrichtung frei beweglich sind und wenigstens eines von ihnen (22) für Betriebszwecke mit Mitteln (44, 48, 50, 52, 56) verbunden ist, welche zu einem Drehantrieb desselben in der Lage sind.

2. Feststellbremsbetätigungseinrichtung (10) gemäß Anspruch 1, bei welcher die Mittel, die zu einem Drehantrieb des wenigstens einen Gewindeelements (22) in der Lage sind, eine Hülse (44) umfassen, in deren Inneren das wenigstens eine Gewindeelement (22) untergebracht ist.

3. Feststellbremsbetätigungseinrichtung (10) gemäß Anspruch 2, bei welcher die Hülse (44) Außenzähne (47) aufweist, die zu einer Rotation um eine Längsachse anzutreiben sind.

4. Feststellbremsbetätigungseinrichtung (10) gemäß Anspruch 3, bei welcher die Mittel, die zu einem Drehantrieb des wenigstens einen Gewindeelements in der Lage sind, einen Elektromotor (48) umfassen, welcher für Betriebszwecke mit der Hülse (44) verbunden ist.

5. Feststellbremsbetätigungseinrichtung (10) gemäß Anspruch 4, bei welcher die Mittel, die zu einem Drehantrieb des wenigstens einen Gewindeelements in der Lage sind, Untersetzungsgetriebemittel (50, 52) umfassen, welche zwischen dem Elektromotor (48) und der Hülse (44) angeordnet sind.

6. Feststellbremsbetätigungseinrichtung (10) gemäß Anspruch 5, bei welcher die Untersetzungsgetriebemittel ein erstes und ein zweites Getrieberad (50, 52) umfassen, die in integrale Rotation um eine Längsachse (54) versetzt werden, wobei das erste Getrieberad (50) mit einem durch den Elektromotor (48) angetriebenen Ritzel (56) kämmt und das zweite Getrieberad (52) mit der Hülse (44) kämmt.

7. Feststellbremsbetätigungseinrichtung (10) gemäß Anspruch 6, bei welcher die Längsachse (54) des ersten und zweiten Getrieberads (50, 52) außerhalb einer Ebene liegt, die die Längsachsen (20a, 22a, 24a) der Gewindeelemente (20, 22, 24) und eine Achse (58) einer Welle (60) des Elektromotors (48) enthält.

8. Feststellbremsbetätigungseinrichtung (10) gemäß einem der Ansprüche 4 bis 7, bei welcher der Elektromotor (48) für Betriebszwecke mit überwachten Betriebsmitteln verbunden ist.

9. Feststellbremsbetätigungseinrichtung (10) gemäß Anspruch 8, bei welcher die überwachten Betriebsmittel vom Typ mit Rückkopplung sind.

10. Feststellbremsbetätigungseinrichtung (10) gemäß einem der Ansprüche 2 bis 9, bei welcher die Hülse (44) im Inneren einer Trägerstruktur (17) an an der Trägerstruktur angebrachten Lagern (46) angebracht ist.

11. Feststellbremsbetätigungseinrichtung (10) gemäß einem der Ansprüche 2 bis 10, bei welcher das wenigstens eine drehbar angetriebene Gewindeelement (22) einen Antriebsabschnitt (36) umfasst, welcher durch die Hülse (44) drehbar angetrieben werden kann.

12. Feststellbremsbetätigungseinrichtung (10) gemäß Anspruch 11, bei welcher die Verbindung zwischen dem Antriebsabschnitt (36) und der Hülse (44) aufgrund ihrer Geometrie eine positive Eingriffsverbindung ist.

13. Feststellbremsbetätigungseinrichtung (10) gemäß Anspruch 12, bei welcher die Verbindung mittels positiver Eingriffsverbindung mit hexagonaler Geometrie hergestellt ist.

14. Feststellbremsbetätigungseinrichtung (10) gemäß Anspruch 12, bei welcher die Verbindung mittels eines Keilverzahnungsbereichs hergestellt ist.

15. Feststellbremsbetätigungseinrichtung (10) gemäß einem der Ansprüche 11 bis 14, bei welcher der Antriebsabschnitt (36) an einem Ende des wenigstens einen drehbar angetriebenen Gewindeelements (22) hergestellt ist.

16. Feststellbremsbetätigungseinrichtung (10) gemäß einem der Ansprüche 11 bis 15, bei welcher sich der Antriebsabschnitt (36) in einer Querrichtung über eine Länge erstreckt, die größer ist als die Querbreite des wenigstens einen Gewindeelements (24), welches außen mit dem drehbar angetriebenen Gewindeelement (22) verbunden ist.

17. Feststellbremsbetätigungseinrichtung (10) gemäß einem der vorhergehenden Ansprüche, bei welcher das wenigstens eine drehbar angetriebene Gewindeelement (22) das wenigstens eine Zwischenelement zwischen dem ersten und dem letzten Gewindeelement (20, 24) ist.

18. Feststellbremsbetätigungseinrichtung (10) gemäß Anspruch 17, bei welcher das erste und das letzte Gewindeelement (20, 24) Mittel (40, 42) umfassen, die dazu in der Lage sind, eine Rotation um die jeweiligen Längsachsen (20a, 24a) zu verhindern.

19. Feststellbremsbetätigungseinrichtung (10) gemäß Anspruch 18, bei welcher die Mittel, die dazu in der Lage sind, eine Rotation des ersten und des letzten Gewindeelements (20, 24) um die jeweiligen Längsachsen (20a, 24a) zu verhindern, Arme (40) umfassen, welche sich quer erstrecken und verschiebbar an zu den Längsachsen (20a, 24a) parallelen Stangen (42) angebracht sind.

20. Feststellbremsbetätigungseinrichtung (10) gemäß einem der vorhergehenden Ansprüche, bei welcher drei Gewindeelemente (20, 22, 24) vorgesehen sind, wobei das erste und das dritte Gewindeelement (20, 24) jeweils mit den Verbindungskabeln (12) verbunden sind und das zweite Gewindeelement (22) das Zwischengewindeelement ist.

21. Feststellbremsbetätigungseinrichtung (10) gemäß einem der vorhergehenden Ansprüche, bei welcher Mittel bereitgestellt sind, um die Verbindungskabel (12) im Falle eines Bruchs der Betätigungseinrichtung zu entriegeln (61, 62).

22. Feststellbremsbetätigungseinrichtung (10) gemäß Anspruch 21, bei welcher die Mittel zum Entriegeln, mindestens eine Gabel (61) umfassen, die dazu Lage ist, einen Mantel (14) des Verbindungskabels (12) in Längsrichtung zu verriegeln, wobei die Gabel (61) beweglich einer Trägerstruktur (17) der Betätigungseinrichtung (10) zugeordnet ist.

23. Fahrzeugfeststellbremse, welche Bremsvorrichtungen umfasst, die für Betriebszwecke mit einer Betätigungseinrichtung (10) gemäß einem der Ansprüche 1 bis 22 verbunden sind.

## Revendications

1. Dispositif de commande de frein de parking de véhicule (10) comprenant :
deux câbles de liaison (12) à des dispositifs de freinage respectifs d'un véhicule,
au moins trois éléments filetés (20, 22, 24) qui s'étendent le long d'axes longitudinaux respectifs (20a, 22a, 24a) et sont reliés les uns aux autres par paires sous forme de vis et écrou, dans lequel un premier et un dernier desdits éléments filetés (20, 24) sont respectivement reliés auxdits câbles de liaison (12),
au moins un élément fileté (22) intermédiaire entre lesdits premier et dernier éléments filetés (20, 24) comportant un filetage extérieur (32) destiné à être relié de façon externe à un élément fileté (24) et un filetage intérieur (34), opposé en pas audit filetage extérieur (32), destiné à recevoir de façon interne un élément fileté supplémentaire (20),
lesdits éléments filetés (20, 22, 24) étant libres de coulisser dans une direction longitudinale et au moins un d'entre eux (22) étant relié dans des buts opérationnels à des moyens capables de l'entraîner de façon angulaire (44, 48, 50, 52, 56).

2. Dispositif de commande de frein de parking (10) selon la revendication 1, dans lequel lesdits moyens capables d'entraîner de façon angulaire ledit au moins un élément fileté (22) comprennent une douille (44) qui loge de façon interne ledit au moins un élément fileté (22).

3. Dispositif de commande de frein de parking (10) selon la revendication 2, dans lequel ladite douille (44) présente des dents externes (47) destinées à être entraînées en rotation autour d'un axe longitudinal.

4. Dispositif de commande de frein de parking (10) selon la revendication 3, dans lequel lesdits moyens capables d'entraîner de façon angulaire ledit au moins un élément fileté comprennent un moteur électrique (48) relié dans des buts opérationnels à ladite douille (44).

5. Dispositif de commande de frein de parking (10) selon la revendication 4, dans lequel lesdits moyens capables d'entraîner de façon angulaire ledit au moins un élément fileté comprennent des moyens d'engrenage de réduction (50, 52) placés entre ledit moteur électrique (48) et ladite douille (44).

6. Dispositif de commande de frein de parking (10) selon la revendication 5, dans lequel lesdits moyens d'engrenage de réduction comprennent une première et une seconde roues d'engrenage (50, 52) obligées de tourner de façon solidaire autour d'un axe longitudinal (54), ladite première roue d'engrenage (50) s'engrenant avec un pignon (56) entraîné par le moteur électrique (48) et ladite seconde roue d'engrenage (52) s'engrenant avec ladite douille (44).

7. Dispositif de commande de frein de parking (10) selon la revendication 6, dans lequel ledit axe longitudinal (54) desdites première et seconde roues d'engrenage (50, 52) se trouve en dehors d'un plan contenant les axes longitudinaux (20a, 22a, 24a) desdits éléments filetés (20, 22, 24) et un axe (58) d'un arbre (60) dudit moteur électrique (48).

8. Dispositif de commande de frein de parking (10) selon une des revendications 4 à 7, dans lequel ledit moteur électrique (48) est relié dans des buts opérationnels à des moyens d'actionnement contrôlés.

9. Dispositif de commande de frein de parking (10) selon la revendication 8, dans lequel lesdits moyens d'actionnement contrôlés sont du type à rétroaction.

10. Dispositif de commande de frein de parking (10) selon une des revendications 2 à 9, dans lequel ladite douille(44) est montée à l'intérieur d'une structure de support (17) sur des paliers (46) installés sur la structure.

11. Dispositif de commande de frein de parking (10) selon une des revendications 2 à 10, dans lequel ledit au moins un élément fileté (22) entraîné de façon angulaire comprend une partie d'entraînement (36) capable d'être entraînée de façon angulaire par ladite douille (44).

12. Dispositif de commande de frein de parking (10) selon la revendication 11, dans lequel la liaison entre ladite partie d'entraînement (36) et ladite douille (44) est une liaison à engagement positif en raison de leur géométrie.

13. Dispositif de commande de frein de parking (10) selon la revendication 12, dans lequel ladite liaison est produite au moyen de liaison à engagement positif avec une géométrie hexagonale.

14. Dispositif de commande de frein de parking (10) selon la revendication 12, dans lequel ladite liaison est produite au moyen d'une section cannelée.

15. Dispositif de commande de frein de parking (10) selon une des revendications 11 à 14, dans lequel ladite partie d'entraînement (36) est réalisée au niveau d'une extrémité dudit au moins un élément fileté (22) entraîné de façon angulaire.

16. Dispositif de commande de frein de parking (10) selon une des revendications 11 à 15, dans lequel ladite partie d'entraînement (36) s'étend dans une direction transversale sur une longueur supérieure à la taille transversale de l'au moins un élément fileté (24) qui est relié de façon externe à l'élément fileté (22) entraîné de façon angulaire.

17. Dispositif de commande de frein de parking (10) selon une des revendications précédentes, dans lequel ledit au moins un élément fileté (22) entraîné de façon angulaire est ledit au moins un élément intermédiaire entre lesdits premier et dernier éléments filetés (20, 24).

18. Dispositif de commande de frein de parking (10) selon la revendication 17, dans lequel lesdits premier et dernier éléments filetés (20, 24) comprennent des moyens (40, 42) capables d'empêcher la rotation autour des axes longitudinaux respectifs (20a, 24a).

19. Dispositif de commande de frein de parking (10) selon la revendication 18, dans lequel lesdits moyens capables d'empêcher la rotation desdits premier et dernier éléments filetés (20, 24) autour des axes longitudinaux respectifs (20a, 24a) comprennent des bras (40) qui s'étendent transversalement et sont montés de façon coulissante sur des tiges (42) parallèles auxdits axes longitudinaux (20a, 24a).

20. Dispositif de commande de frein de parking selon une des revendications précédentes, dans lequel trois éléments filetés (20, 22, 24) sont fournis, le premier et le troisième éléments filetés (20, 24) étant respectivement reliés auxdits câbles de liaison (12) et le deuxième élément fileté (22) étant ledit élément fileté intermédiaire.

21. Dispositif de commande de frein de parking (10) selon une des revendications précédentes, dans lequel des moyens sont fournis pour déverrouiller (61, 62) lesdits câbles de liaison (12) en cas de rupture du dispositif de commande.

22. Dispositif de commande de frein de parking (10) selon la revendication 21, dans lequel lesdits moyens pour déverrouiller comprennent au moins une fourche (61) capable de verrouiller longitudinalement une gaine (14) desdits câbles de liaison (12), ladite fourche (61) étant associée de façon mobile à une structure de support (17) dudit dispositif de commande (10).

23. Frein de parking de véhicule comprenant des dispositifs de freinage reliés dans des buts opérationnels à un dispositif de commande (10) selon une des revendications 1 à 22.
